# EUROPÄISCHE PATENTANMELDUNG

(11) **EP 2 036 642 A2**
(43) Veröffentlichungstag der Anmeldung: **18.03.2009**
(21) Anmeldenummer: 08012191.6
(22) Anmeldetag: 05.07.2008
(51) Int. Cl.: B23D 45/12, B23D 47/04

(54) **Vorrichtung zum mechanischen Umfangsbearbeiten von ring- oder büchsenförmigen Werkstücken**

(30) Priorität: 12.09.2007 DE 102007043359
(71) Anmelder: Möck, Walter, 72820 Sonnenbühl (DE)
(72) Erfinder: Möck, Walter, 72820 Sonnenbühl (DE)
(74) Vertreter: Kohler Schmid Möbus

(57) **Zusammenfassung**

Eine Vorrichtung (10) zum mechanischen Umfangsbearbeiten von ring- oder büchsenförmigen Werkstücken (12) weist eine Spanneinrichtung (14) zum Halten eines Werkstücks (12), eine Sägeeinrichtung (24) zum Durchtrennen des Werkstücks (12) und eine Antriebseinrichtung auf, mit der das Werkstück gegenüber der Sägeeinrichtung (24) rotativ antreibbar ist. Neben der Sägeeinrichtung ist in der Vorrichtung mindestens ein Werkzeughalter zur Aufnahme mindestens eines Werkzeugs vorgesehen, wobei mit dem Werkzeug der Werkstückrohling vor einem Trennvorgang bearbeitet wird.

## Beschreibung

Die Erfindung betrifft eine Vorrichtung zum mechanischen Umfangsbearbeiten von ring- oder büchsenförmigen Werkstücken mit einer Spanneinrichtung zum Halten eines Werkstücks, mit einer Sägeeinrichtung zum Durchtrennen des Werkstücks und mit einer Antriebseinrichtung, über die das Werkstück gegenüber der Sägeeinrichtung rotativ antreibbar ist.

Eine derartige Vorrichtung ist beispielsweise durch die europäische Patentschrift EP 1 436 112 B1 bekannt geworden.

Die zum Stand der Technik zählende Vorrichtung zum Trennen von Werkstücken weist eine Antriebseinrichtung und eine Spanneinrichtung zum Halten eines Werkstücks auf, wobei zumindest eine Sägeeinrichtung zum Durchtrennen des Werkstücks vorgesehen ist und das Werkstück rotativ gegenüber der Sägeeinrichtung antreibbar ist. Das zu bearbeitende Werkstück ist beim Durchtrennen auf zumindest einer Aufnahmeeinrichtung rotativ gelagert und/oder eingespannt, und die zumindest eine Aufnahmeeinrichtung ist gegenüber einem Untergrund federnd und/oder dämpfend gelagert. Die Sägeeinrichtung weist eine Zustelleinrichtung auf, mit der die Sägeeinrichtung gegen das Werkstück und gegen die Aufnahmeeinrichtung bewegbar ist. Mit der bekannten Vorrichtung können rohrförmige Werkstücke durchtrennt werden. Bei diesem Trennungsvorgang findet in der bekannten Vorrichtung kein weiterer mechanischer Bearbeitungsvorgang des Werkstücks - weder vor noch nach dem Durchtrennen des Werkstücks - statt. Weitere Bearbeitungsschritte einer mit der bekannten Vorrichtung hergestellten Büchse müssen in der bekannten Vorrichtung nachgeschalteten Bearbeitungszentren vorgenommen werden.

Aufgabe der Erfindung ist es, eine Vorrichtung zu schaffen und ein Arbeitsverfahren bereitzustellen, das einen Werkstückrohling bearbeiten und ablängen kann und mit dem nachfolgende Bearbeitungsschritte am abgelängten Werkstück verringert werden bzw. unterbleiben können.

Erfindungsgemäß wird die Aufgabe dadurch gelöst, dass im Bereich der Sägeeinrichtung mindestens ein Werkzeughalter zur Aufnahme mindestens eines Werkzeugs vorgesehen ist, wobei der Werkzeughalter an der Sägeeinrichtung in axialer Richtung des Werkstücks gesehen vor und/oder nach der Sägeeinrichtung vorgesehen ist.

Die erfindungsgemäße Vorrichtung hat damit den wesentlichen Vorteil, dass Büchsen und beispielsweise Lagerringe in einer einzigen Vorrichtung bis zum gewünschten Endprodukt gefertigt werden können. Die aus einem Werkstück zu fertigende Büchse wird in einem ersten Arbeitsschritt der gewünschten Rundungsgenauigkeit angepasst, indem man beispielsweise in einem Drehprozess den Außen- und/oder Innendurchmesser auf das gewünschte Endmaß mit der gewünschten Toleranz dreht. Gleichzeitig bzw. anschließend kann die Außenund/oder Innenoberfläche auf die gewünschte Oberflächengüte bearbeitet werden (z. B. geschliffen, poliert, gehont). Das freie aus dem Spannfutter ragende Ende des Werkstücks kann im Stirnflächenbereich entgratet oder auch weiterbearbeitet werden, sodass zumindest ein Teilabschnitt des eingespannten Werkstücks die gewünschten Maße und Güteoberflächen aufweist, die für die vom Werkstück abzutrennende Büchse bzw. den Ring gefordert werden.

Wird nun der bearbeitete Werkstückabschnitt, der zumindest die geforderte Büchsenlänge bzw. Ringbreite (in axialer Richtung des Werkstücks gesehen) aufweist, abgetrennt, indem mittels einer Sägeeinrichtung das mit der Spanneinrichtung rotierende Werkstück durchtrennt wird, so liegt eine vom Werkstück abgetrennte Büchse oder Ring vor, die oder der im ungünstigsten Fall nur noch an dem Ende der Schnittstirnfläche zu entgraten ist. Diesen Entgratungsvorgang bzw. eine gewünschte zusätzliche Stirnflächenbearbeitung kann mit dem oder den Werkzeugen aus dem Werkzeughalter erfolgen, der vor der Sägeeinrichtung und/oder ihr nachfolgend vorgesehen ist. Somit ist in einem Arbeitsablauf eine Büchse oder ein Ring in einer Vorrichtung entstanden, der keinerlei Nachbearbeitungen bedarf. Die gewünschten Werkstückabschnitte können somit schnell und in beliebiger Güte hergestellt werden. Der gesamte Herstellungsprozess für eine Büchse oder für einen Lagerring vereinfacht sich, und die dafür benötigte Zeiteinheit kann gegenüber aus dem Stand der Technik bekannten Fertigungszeiten verkürzt werden.

In weiterer Ausgestaltung der Erfindung ist das Werkstück zum Bearbeiten einenends in die Spanneinrichtung einsetzbar, und mit der Sägeeinrichtung und mit dem oder den Werkzeugen kann ein freier Endbereich des Werkstücks bearbeitet werden. Die Spanneinrichtung hält ein in diese Einrichtung eingesetztes Werkstück zentrisch, und mit den Werkzeugen des Werkzeughalters können auch Werkstückrohlinge bearbeitet werden, bevor sie mittels einer Sägeeinrichtung von dem eingespannten Werkstück abgetrennt werden.

Vorteilhaft ist es dabei, wenn die Spanneinrichtung als Hohlspannfutter und/oder als Backenfutter ausgebildet ist. Wird ein Hohlspannfutter verwendet, so kann auch ein längeres Werkstück in das Spannfutter eingeschoben werden, und nach einem oder mehreren Abtrennvorgängen wird aus dem Hohlspannfutter ein neuer Werkstückabschnitt zur Bearbeitung aus dem Hohlspannfutter vorgeschoben, sodass die Werkzeuge im Umfeld der Sägeeinrichtung das Werkstück zuvor in gewünschter Weise bearbeiten können, bevor es durchtrennt wird. Mit dem Backenfutter kann das zu bearbeitende Werkstück sicher gehalten werden.

Weiterhin ist es vorteilhaft, wenn die Spanneinrichtung und/oder die Sägeeinrichtung horizontal verfahrbar ist. Sind die vorgenannten Möglichkeiten gegeben, so kann das zu bearbeitende Werkstück schnellst- und bestmöglich zu den Werkzeugen oder zu der Sägeeinrichtung verfahren oder von diesen Einrichtungen weg verfahren werden, sodass kürzestmögliche Totzeiten im Gesamtbearbeitungsprozess des Werkstücks entstehen.

Besonders vorteilhaft ist es, wenn der oder die Werkzeughalter als Revolverkopf bzw. Revolverköpfe ausgebildet sind und gleichzeitig so ausgestattet sind, dass sie mehrere, auch bei Bedarf unterschiedliche angetriebene und/oder nicht angetriebene Werkzeuge aufnehmen können. Mit diesen Werkzeugen wird vor einem Trennprozess das in der Spanneinrichtung befindliche Werkstück zumindest über eine axiale Länge so weit bearbeitet, wie diese Länge vom übrigen Werkstück abgetrennt werden soll. Als Werkzeuge kommen beispielsweise Drehmeißel aber auch Fräser oder Bohrer infrage.

In besonderer Ausgestaltung der Erfindung weist die Vorrichtung ein verfahrbares Abholfutter für ein bearbeitetes oder für ein in Bearbeitung befindliches Werkstück auf, sodass das abgetrennte Werkstück schnellstmöglich aus der Vorrichtung zu einer weiteren Verwendung bzw. zu seiner Bestimmung transportiert werden kann. Ist das abgetrennte Werkstück aus der Vorrichtung herausgefördert, kann mit einem weiteren Bearbeitungsprozess mit den Werkzeugen an dem in der Spanneinrichtung verbleibenden Werkstück begonnen werden. Das Abholfutter kann ein in Öl schwimmend gelagertes Backenfutter aufweisen, sodass auch Werkstücke mit unrunden Innenraumverhältnissen (keine Bearbeitung an der Innenoberfläche oder unterschiedliche Ausformung über den Innenumfang des abzutrennenden Werkstücks gesehen) vom Abholfutter sicher aufgenommen und abtransportiert werden können. Dies ist beispielsweise bei nicht ausgedrehten geschmiedeten Büchsen bedeutsam.

Alternativ zu einem Abholfutter, das rotativ zum rotierenden Backenfutter oder zur rotierenden Spanneinrichtung synchronisiert ist, kann das abgetrennte Werkstück von einem Aufnahmedorn aufgenommen werden. Der Aufnahmedorn kann schon während des Abtrennprozesses in das rohrförmige Werkstück eingefahren werden, oder der Aufnahmedorn greift das abgetrennte Werkstück nach beendetem Abtrennprozess auf.

Das Abholfutter bzw. die Abholspindel kann das vom Rohling abgetrennte Werkstück auch derart halten und/oder in der Vorrichtung in Position bringen, dass eine weitere spannabhebende und/oder spannlose Bearbeitung des Werkstücks erfolgen kann, bevor es seiner weiteren Bestimmung zugeführt wird. Dies hat beispielsweise den Vorteil, dass bei Bedarf mindestens zwei Bearbeitungsschritte am in der Vorrichtung befindlichen Rohling abzutrennenden/abgetrennten Werkstück gleichzeitig durchgeführt werden können. Sind für mehrere Bearbeitungsschritte am Rohling bzw. am abgetrennten Werkstück weitere Werkzeughalter mit Werkzeugen notwendig, so können diese Werkzeughalter zusätzlich, verschwenk- und/oder verfahrbar, an und/oder in der Vorrichtung vorgesehen sein. Gesamtbearbeitungszeiten am Rohling und dem abzutrennenden Werkstück bzw. abgetrennten Werkstück können mit diesen Maßnahmen weiter verkürzt werden.

Die Sägeeinrichtung ist vorteilhafterweise auf das zu bearbeitende und rotierende Werkstück zu oder von diesem Werkstück weg schwenkbar. Damit können neue Werkstücke erleichtert in die Vorrichtung eingebracht werden, und bearbeitete abgetrennte Werkstücke können erleichtert aus der Vorrichtung herausgenommen werden. Alle Zustellbewegungen können vereinfacht und zeitlich direkter und schneller ausgeführt werden. Ebenfalls ist/sind zumindest in einer Ausführungsform der Erfindung der oder die Werkzeughalter verschwenkbar bzw. verfahrbar an der Vorrichtung gelagert, damit auch der oder die Werkzeughalter auf ein zu bearbeitendes Werkstück zu oder von diesem Werkstück weg bewegbar ist/sind.

Die in die Werkzeughalter eingespannten Werkzeuge sind für die Bearbeitung der Außen- und/oder Innenoberflächen des Werkstücks vorgesehen, und mit diesen Werkzeugen können auch Stirnflächen des Werkstücks bearbeitet werden. Beispielsweise lassen sich mit diesen Werkzeugen die Stirnflächen entgraten.

Die Werkstücke, die zur Bearbeitung in die Vorrichtung eingespannt werden, können unterschiedlichste Durchmesser aufweisen, und es können Werkstücke sein, die geschmiedet, gegossen worden sind und aus Metall bestehen. Diese rohrförmigen, büchsenartigen Werkstücke oder Schleudergussrohre werden in der erfindungsgemäßen Vorrichtung bearbeitet. Bevorzugt werden in der erfindungsgemäßen Vorrichtung Werkstücke aus Kupfer bearbeitet. Bei Bedarf kann das zu bearbeitende Werkstück auch noch zusätzlich auf Stützrollen gelagert sein. Damit wird ein Spannfutter, das das rotierende Werkstück in Position hält, entlastet.

Bei einem erfindungsgemäßen Verfahren zum mechanischen Umfangsbearbeiten von ring- oder büchsenförmigen Werkstücken werden folgende Verfahrensschritte ausgeführt:

Ein zu bearbeitendes Werkstück wird in die Vorrichtung eingeführt, beispielsweise über einen Hebekran, und es wird einseitig in ein Backenfutter der Vorrichtung eingespannt. Dieses Backenfutter kann auch als Hohlspannfutter ausgebildet sein. Anschließend wird das oder werden die Werkzeuge zum rotierenden oder zum nach der Zustellung rotierenden Werkstück zugestellt, damit die gewünschte Bearbeitung eines Rohlings erfolgen kann, wobei das oder die Werkzeuge angetrieben oder nicht angetrieben sein können. Die Innenund/oder Außenoberflächen des Werkstücks bzw. das freie Ende des Werkstücks werden auf die gewünschte Oberflächengüte und Formgebung bearbeitet. Anschließend erfolgt das Abtrennen des bearbeiteten von im Backenfutter eingespannten Werkstücks mittels einer Sägeeinrichtung. Die Sägeeinrichtung kann als Kreissäge ausgebildet sein. Der Durchtrennvorgang kann aber auch mittels eines Lasers oder eines Wasserstrahls erfolgen. Danach wird der abgetrennte Werkstückabschnitt durch ein Abholfutter oder mittels eines Aufnahmedorns aus der Vorrichtung heraustransportiert bzw. umgelagert. Das Abholfutter bzw. der Aufnahmedorn kann schon während des Abtrennprozesses in den abgetrennten Werkstückabschnitt eingreifen bzw. diesen aufnehmen. Alternativ oder zusätzlich kann der bearbeitete Werkstückabschnitt auch mittels eines Rollenförderers aus der Vorrichtung herausgeführt werden.

In einer weiteren vorteilhaften Ausgestaltung der Erfindung kann in einem weiteren Bearbeitungsschritt nach dem Trennprozess die Schnittfläche des bearbeiten Werkstückabschnitts weiter bearbeitet, beispielsweise entgratet werden.

Die erfindungsgemäße Vorrichtung wird in den nachfolgenden Figuren stark schematisiert dargestellt und in einem Ausführungsbeispiel beschrieben.

Es zeigt:
- Fig. 1: eine erste Ansicht einer erfindungsgemäßen Vorrichtung mit einem in eine Spanneinrichtung eingespannten Werkstück und einer Sägeeinrichtung mit einem Werkzeughalter, der von dem zu bearbeitenden Werkstück beabstandet ist; und
- Fig. 2: eine weitere Ansicht der erfindungsgemäßen Vorrichtung mit einem in eine Spanneinrichtung eingespannten Werkstück und einem Werkzeughalter, der zur Bearbeitung dem Werkstück zugestellt ist.

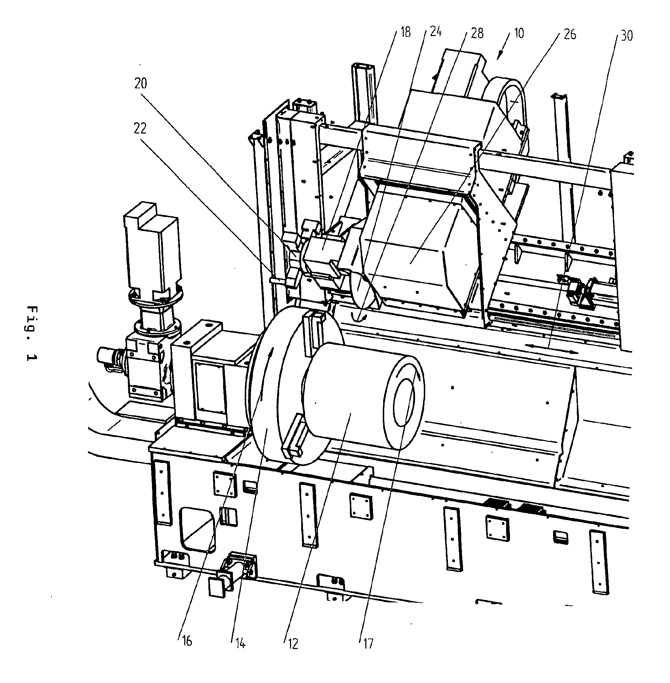

Fig. 1 zeigt mit 10 eine Vorrichtung zum Bearbeiten von rohrförmigen Werkstückrohlingen, wobei ein Werkstück 12 in ein Backenfutter 14 eingespannt ist. Das Backenfutter 14 weist einen Antrieb auf, sodass das Backenfutter 14 mit dem eingespannten Werkstück 12 in Pfeilrichtungen 16, 17 rotieren kann. Der Antrieb des Backenfutters 14 ist so ausgelegt, dass das Backenfutter 14 und auch das Werkstück 12 entgegen den Pfeilrichtungen 16, 17 rotieren kann.

Mit 18 ist in der Vorrichtung 10 ein Werkzeughalter gezeigt, der als Revolverkopf 20 ausgebildet ist. Der Revolverkopf 20 kann mehrere Werkzeuge aufnehmen, und von den möglichen Werkzeugen ist ein Drehmeißel 22 gezeigt, wie er in dem Revolverkopf 20 gehalten ist. Neben dem Werkzeughalter 18 ist eine Kreissäge 24 angeordnet, die einen Antrieb 26 aufweist, mit dem das Kreissägeblatt der Kreissäge 24 in Pfeilrichtung 28 drehen kann. Im dargestellten Beispiel rotiert das Backenfutter 14 gegensinnig zum Kreissägeblatt 24. Je nach dem zu bearbeitenden Material könnte das Backenfutter 14 jedoch auch gleichsinnig zum Kreissägeblatt, d. h. entgegen den Pfeilrichtungen 16, 17 angetrieben werden. Sowohl die Kreissäge 24 mit dem Antrieb 26 als auch der Werkzeughalter 18 sind innerhalb der Vorrichtung 10 in Pfeilrichtungen 30 verfahrbar.

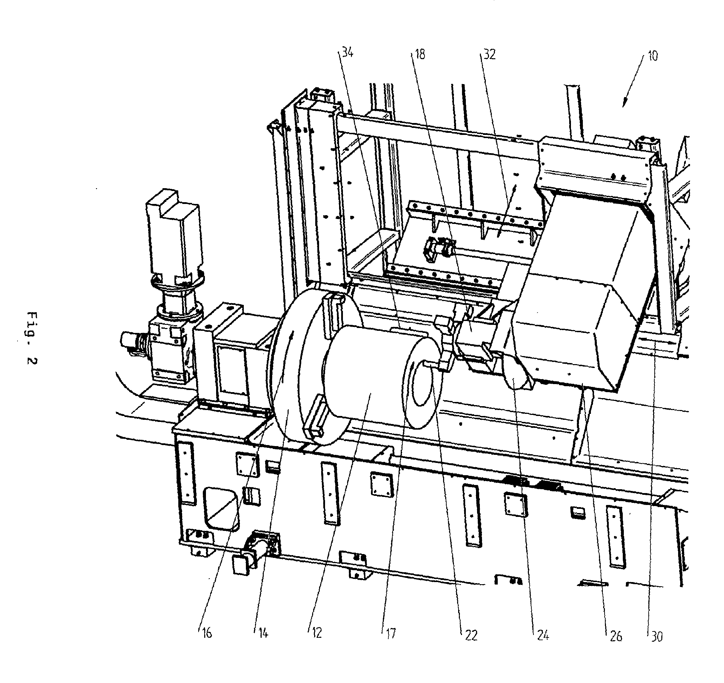

Fig. 2 zeigt die erfindungsgemäße Vorrichtung 10 mit einem zum Werkstück 12 zugestellten Werkzeughalter 18. Über den Werkzeughalter 18 wird ein Drehmeißel 22 zum Entgraten an die Kante der Innenoberfläche des Werkstücks 12 am freien Ende des Werkstücks 12 geführt. Mit dem Drehmeißel 22 kann auch die Innenoberfläche des Werkstücks 12 bearbeitet werden. Über den Revolverkopf 20 lassen sich unterschiedlichste Werkzeuge dem Werkstück 12 zustellen, sodass unterschiedlichstes Oberflächenbearbeiten am Werkstück 12 möglich ist.

Wird das Werkstück 12 beispielsweise mit einem Drehmeißel 22 bearbeitet, so rotiert das Werkstück 12 mit dem Backenfutter 14 und dem Werkstück 12 in Pfeilrichtungen 16, 17. Während dieser Rotation kann der Werkzeughalter in Pfeilrichtungen 30 verfahren werden. Das heißt, je nach Bedarf kann der Drehmeißel 22 weiter auf das Werkstück zu verfahren werden, oder der Drehmeißel 22 wird in Pfeilrichtung 30 so verfahren, dass er von dem Werkstück 12 beabstandet ist. In der Fig. 2 ist der Werkzeughalter 18 und die Kreissäge 24 mit dem Antrieb 26 in Pfeilrichtung 32 auf das Werkstück 12 hin soweit verschwenkt, dass die mechanische Bearbeitung mit den Werkzeugen aus dem Werkzeughalter 18 an dem Werkstück 12 erfolgen kann. Ist die Bearbeitung über die Werkzeuge an dem Werkstück 12 beendet, so wird der Werkzeughalter 18 aus dem Bearbeitungsbereich am Werkstück 12 heraus verschwenkt bzw. aus dem Arbeitsbereich heraus verfahren, und die Kreissäge 24 wird so dem Werkstück 12 zugestellt, dass ein bearbeiteter Werkstückabschnitt 34 von dem Werkstück 12 abgetrennt werden kann. Im Ausführungsbeispiel erfolgt der Trennvorgang in bekannter Weise, wie er beispielsweise im Stand der Technik in EP 1 436 112 B1 beschreiben ist.

Natürlich kann das zu bearbeitende Werkstück 12 neben der Einspannung in das Backenfutter 14 noch über Stützrollen abgestützt werden, und auch der Trennprozess kann in zwei Schritten erfolgen, sodass beispielsweise zuerst ein Ansägen des Werkstücks erfolgt und danach sich Spaltrollen in den Sägespalt senken, um beim Abschnitt des zu bearbeitenden Werkstückabschnitts 34 ein Blockieren der Säge zu verhindern. In den Figuren ist ein Abholfutter bzw. ein Aufnahmedorn des bearbeiteten Werkstückabschnitts 34 nicht gezeigt. Schon während des Trennvorgangs kann das Abholfutter in den Innenraum des bearbeiteten Werkstückabschnitts einfahren und diesen Werkstückabschnitt gespannt aufnehmen. In diesem Fall rotiert das Abholfutter synchronisiert mit dem Backenfutter 14 und dem Werkstück 12. Ist der bearbeitete Werkstückabschnitt abgetrennt, so wird über das Abholfutter der bearbeitete Werkstückabschnitt aus der Vorrichtung 10 herausgefördert, und bei Bedarf wird noch vor einer Abgabe des bearbeiteten Werkstückabschnitts an eine weitere Bestimmung die Schnittfläche des im Übrigen bearbeiteten Werkstücks über die Werkzeuge des Werkzeughalters wunschgemäß bearbeitet.

Eine Vorrichtung 10 zum mechanischen Umfangsbearbeiten von ring- oder büchsenförmigen Werkstücken 12 weist eine Spanneinrichtung 14 zum Halten eines Werkstücks 12, eine Sägeeinrichtung 24 zum Durchtrennen des Werkstücks 12 und eine Antriebseinrichtung auf, mit der das Werkstück gegenüber der Sägeeinrichtung 24 rotativ antreibbar ist. Neben der Sägeeinrichtung ist in der Vorrichtung mindestens ein Werkzeughalter zur Aufnahme mindestens eines Werkzeugs vorgesehen, wobei mit dem Werkzeug der Werkstückrohling vor einem Trennvorgang bearbeitet wird.

## Patentansprüche

1. Vorrichtung zum mechanischen Umfangsbearbeiten von ring- oder büchsenförmigen Werkstücken (12) mit einer Spanneinrichtung (14) zum Halten eines Werkstücks (12), mit einer Sägeeinrichtung (24) zum Durchtrennen des Werkstücks (12) und mit einer Antriebseinrichtung, über die das Werkstück (12) gegenüber der Sägeeinrichtung (24) rotativ antreibbar ist, **dadurch gekennzeichnet, dass** im Bereich der Sägeeinrichtung (24) mindestens ein Werkzeughalter (18) zur Aufnahme mindestens eines Werkzeugs (22) vorgesehen ist, wobei der Werkzeughalter (18) an der Sägeeinrichtung (24) in axialer Erstreckung des Werkstücks (12) gesehen vor und/oder nach der Sägeeinrichtung (24) vorgesehen ist.

2. Vorrichtung nach Anspruch 1, **dadurch gekennzeichnet, dass** das Werkstück (12) zum Bearbeiten einenends in die Spanneinrichtung (14) einsetzbar ist und dass mit der Sägeeinrichtung (24) anderenends und mit dem oder den Werkzeugen (22) ein Endbereich des Werkstücks (12) bearbeitbar ist.

3. Vorrichtung nach Anspruch 1 oder 2, **dadurch gekennzeichnet, dass** die Spanneinrichtung als Hohlspannfutter und/oder als Backenfutter (14) ausgebildet ist.

4. Vorrichtung nach einem der Ansprüche 1 bis 3, **dadurch gekennzeichnet, dass** die Spanneinrichtung (14) die Antriebseinrichtung zur rotativen Drehung des Werkstücks (12) aufweist.

5. Vorrichtung nach einem der Ansprüche 1 bis 4, **dadurch gekennzeichnet, dass** die Spanneinrichtung (14) und/oder die Sägeeinrichtung (24) horizontal verfahrbar ist.

6. Vorrichtung nach einem der Ansprüche 1 bis 5, **dadurch gekennzeichnet, dass** der oder die Werkzeughalter (18) als Revolverkopf (20) bzw. Revolverköpfe zur gleichzeitigen Aufnahme von mehreren angetriebenen und/oder nicht angetriebenen Werkzeugen (22) ausgebildet ist/sind.

7. Vorrichtung nach einem der Ansprüche 1 bis 6, **dadurch gekennzeichnet, dass** die Vorrichtung (10) ein verfahrbares Abholfutter für ein bearbeitetes oder für ein in Bearbeitung befindliches Werkstück (12) aufweist.

8. Vorrichtung nach einem der Ansprüche 1 bis 6, **dadurch gekennzeichnet, dass** die Vorrichtung (10) einen Aufnahmedorn für ein bearbeitetes oder für ein in Bearbeitung befindliches Werkstück (12) aufweist.

9. Vorrichtung nach einem der Ansprüche 1 bis 8, **dadurch gekennzeichnet, dass** die Sägeeinrichtung (24) auf das zu bearbeitende und rotierende Werkstück (12) zu oder von dem Werkstück (12) weg verschwenkbar ist.

10. Vorrichtung nach einem der Ansprüche 1 bis 9, **dadurch gekennzeichnet, dass** der oder die Werkzeughalter (18) auf das Werkstück (12) zu oder von dem Werkstück (12) weg verschwenkbar ist/sind.

11. Vorrichtung nach einem der Ansprüche 1 bis 10, **dadurch gekennzeichnet, dass** das oder die Werkzeuge (22) zur Außen- und/oder Innenoberflächenbearbeitung und/oder zum Entgraten des oder der freien Enden des Werkstücks (12) vorgesehen ist/sind.

12. Vorrichtung nach einem der Ansprüche 1 bis 11, **dadurch gekennzeichnet, dass** das oder die in der Vorrichtung (10) zu bearbeitenden Werkstücke (12) unterschiedliche Durchmesser aufweisen und geschmiedete, gegossene Büchsen, Rohre oder Schleudergussrohre aus Metall sind.

13. Vorrichtung nach Anspruch 12, **dadurch gekennzeichnet, dass** das oder die zu bearbeitenden Werkstücke (12) aus dem Werkstoff Kupfer sind.

14. Vorrichtung nach einem der Ansprüche 1 bis 13, **dadurch gekennzeichnet, dass** das zu bearbeitende Werkstück (12) auf Stützrollen gelagert ist.

15. Verfahren zum mechanischen Umfangsbearbeiten von ring- oder büchsenförmigen Werkstücken (12) mit folgenden Verfahrensschritten:
a) Einführen des zu bearbeitenden Werkstücks (12) in die Vorrichtung (10) und einseitiges Einspannen des Werkstücks (12) in ein Backenfutter (14);
b) Zustellen des Werkzeugs (22) oder der Werkzeuge zum rotierenden oder zum nach der Zustellung rotierenden Werkstück (12);
c) Bearbeitung der Außen- und/oder Innenoberfläche und/oder des freien Endes des Werkstücks (12) mit dem oder den angetriebenen und/oder nicht angetriebenen Werkzeugen (22);
d) Abtrennen eines bearbeiteten Werkstückabschnitts (34) von im Backenfutter (14) eingespannten Werkstücken (12) mittels einer Sägeeinrichtung (24);
e) Aufnahme des abgetrennten Werkstückabschnitts (34) durch ein Abholfutter oder einen Aufnahmedorn;
f) Ausführen des bearbeiteten Werkstückabschnitts (34) aus der Vorrichtung (10) mittels des Abholfutters oder des Aufnahmedorns oder mittels eines Rollenförderers.

16. Verfahren nach Anspruch 15, **dadurch gekennzeichnet, dass** nach Verfahrensschritt (d) das abgetrennte freie Ende des Werkstückabschnitts (34) mit dem oder den Werkzeugen (22) bearbeitet wird, insbesondere dass das freie Ende entgratet wird.
